# EUROPEAN PATENT APPLICATION

(11) **EP 4 600 709 A1**
(43) Date of publication of application: **13.08.2025**
(21) Application number: 25156635.2
(22) Date of filing: 07.02.2025
(51) Int. Cl.: G02B 6/44, H04Q 1/02

(54) **LOCKING SYSTEM FOR TELECOMMUNICATIONS TRAY AND EQUIPMENT**

(30) Priority: 08.02.2024 CN 202410178528
(71) Applicant: AFL Telecommunications (Shenzhen) Co., Ltd, Shenzhen (CN)
(72) Inventor: QUI, Menglong, Shenzhen (CN); GUO, Huilue, Shenzhen (CN)
(74) Representative: Serjeants LLP

(57) **Abstract**

A locking system (130) and a tray assembly (115) for a telecommunications tray are provided. The locking system (130) is attachable to a wall (114) at a housing of the tray assembly (115). The locking system (130) is configured to selectively inhibit movement of a tray base (120) from an extended position and a retracted position. The locking system (130) includes a member (134) and a limiter attachable to a mount (118). The member (134) is positioned in sliding arrangement relative to the limiter. The limiter includes a selectively deformable tab. The member (134) is translatable along a first direction to apply a force from the member (134) to the tab to position the tab in a locked position to align the at least a portion of the tab with the mount along the direction of travel. The member (134) is translatable along a second direction to allow the tab to position in an unlocked position removing the tab from alignment with the mount.

## Description

### FIELD

The present disclosure relates generally to telecommunications equipment, and more particularly to equipment for fiber optic cables.

### BACKGROUND

Trays and shelves are used for telecommunications to hold fiber optic cables in desired positions to mate with other cables. Each shelf contains individual pull-out trays. Each tray includes a plurality of adapters that cables plug into to form mated pairs. The trays are pulled outward from the shelf to a position to facilitate a user with manipulation of the cables. As cables are plugged into or unplugged from the adapters, the force of manipulating these trays can cause the tray to undesirably slide back into the shelf. Such undesirable backsliding causes loss of efficiency, time, and effort, as the tray must be moved back into the desired position for the user to perform tasks, administration, or manipulation at the tray.

A tray that can affix into a desired position would be beneficial and advantageous. Furthermore, mechanisms for affixing the tray into the desired position that limit space or interference with cables would be beneficial and advantageous.

### BRIEF DESCRIPTION

Aspects and advantages of the invention will be set forth in part in the following description, or may be understood from the description, or may be learned through practice of the invention.

An aspect of the present disclosure is directed to a tray assembly for a telecommunications tray. The tray assembly includes a housing including a wall coupled to a mount. A tray base is in sliding arrangement relative to the mount. The tray base is configured to move between an extended position at least partially extending out of the housing and a retracted position into the housing. A locking system is coupled to the wall at the housing. The locking system is configured to selectively inhibit movement of the tray base from the extended position and the retracted position. The locking system includes a member extending along a direction of travel of the tray base. The locking system includes a limiter coupled to the mount. The member is positioned in sliding arrangement relative to the limiter. The limiter includes a selectively deformable tab. The member is translatable along a first direction to apply a force from the member to the deformable tab to position the deformable tab in a locked position to align the at least a portion of the deformable tab with the mount along the direction of travel of the tray base. The member is translatable along a second direction to allow the deformable tab to position in an unlocked position removing the deformable tab from alignment with the mount along the direction of travel of the tray base.

The deformable tab may include an elastic, compliant material configured to position in the unlocked position when the member is removed from the deformable tab. The force from the member may bend the deformable tab to the locked position.

The deformable tab may include a protrusion configured to contact the member to position the deformable tab in the locked position. The protrusion may be configured to align with the mount along the direction of travel of the tray base to position the deformable tab in the locked position.

The deformable tab may include a protrusion configured to bend substantially perpendicular to the first direction or second direction to position the deformable tab in the unlocked position.

The limiter may form a body at which the member is permitted to selectively contact the deformable tab.

The deformable tab may include a protrusion. The member may be configured to contact the protrusion to position the deformable tab in the locked position.

The limiter forming the body may form an opening through which the member is extendable along the direction of travel to selectively contact the deformable tab.

The member may comprise a recess. The deformable tab may be extended into the recess when the deformable tab is in the unlocked position.

The deformable tab may include a protrusion extending substantially perpendicular to the first direction or the second direction. The protrusion may extend into the recess when the deformable tab is in the unlocked position.

The locking system may include a limit pin extending from the member. The limit pin may form a detent along the direction of travel.

The limit pin may be positioned in a slot at the member and may extend along the direction of travel of the tray base. An extension of the slot along the direction of travel and the limit pin extending from the slot may limit movement of the member along the direction of travel.

The limit pin may be affixed to the tray base and may extend through the slot at the member.

The locking system may include a user interface tab positioned at the member. The user interface tab may be configured to receive the force to translate the member along the first direction or the second direction.

The tray base may include a rail extending along the direction of travel in sliding arrangement with the mount.

The member may include a first limiter and a second limiter separated from one another along the direction of travel of the tray base. The first limiter may be positioned to inhibit movement along the first direction. The second limiter may be positioned to inhibit movement along the second direction opposite along the direction of travel from the first direction.

Another aspect of the present disclosure is directed to a locking system for a tray assembly. The locking system includes a member extending along a direction of travel of the tray assembly. The member includes a recess. A limiter is attachable to a fixed structure at the tray assembly. The limiter includes an opening into which the member is extendable in sliding arrangement along the direction of travel of the tray assembly. The limiter includes a selectively deformable tab including a compliant, elastic material. The member is translatable along a first direction to allow the deformable tab to extend at least partially into the recess at the member to position the locking system in an unlocked position. The member is translatable along a second direction to apply a force from the member to the deformable tab to position the locking system in a locked position.

Other features of the locking system may be as described above.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 depicts an exemplary embodiment of a mount system in accordance with aspects of the present disclosure;
Fig. 2 depicts an exemplary embodiment of a tray assembly in accordance with aspects of the present disclosure;
Fig. 3 depicts an exemplary embodiment of a locking system in accordance with aspects of the present disclosure;
Fig. 4A depicts an exemplary embodiment of the tray assembly including an embodiment of the locking system in an unlocked position in accordance with aspects of the present disclosure;
Fig. 4B depicts a detailed view at the tray assembly of Fig. 4A in accordance with aspects of the present disclosure;
Fig. 5A depicts an exemplary embodiment of the tray assembly including an embodiment of the locking system in a locked position in accordance with aspects of the present disclosure;
Fig. 5B depicts a detailed view at the tray assembly of Fig. 5A in accordance with aspects of the present disclosure;
Fig. 6A depicts an exemplary embodiment of the tray assembly in a closed position and the locking system in the unlocked position in accordance with aspects of the present disclosure;
Fig. 6B depicts a detailed view at the tray assembly of Fig. 6A in accordance with aspects of the present disclosure;
Fig. 7A depicts an exemplary embodiment of the tray assembly in a closed position and the locking system in the locked position in accordance with aspects of the present disclosure;
Fig. 7B depicts a detailed view at the tray assembly of Fig. 7A in accordance with aspects of the present disclosure;
Fig. 8A depicts an exemplary embodiment of the tray assembly in an open position and the locking system in the unlocked position in accordance with aspects of the present disclosure;
Fig. 8B depicts a detailed view at the tray assembly of Fig. 8A in accordance with aspects of the present disclosure;
Fig. 9A depicts an exemplary embodiment of the tray assembly in an open position and the locking system in the locked position in accordance with aspects of the present disclosure;
Fig. 9B depicts a detailed view at the tray assembly of Fig. 9A in accordance with aspects of the present disclosure;
Fig. 10A depicts an exemplary embodiment of the tray assembly in an open position and the locking system in the unlocked position in accordance with aspects of the present disclosure;
Fig. 10B depicts a detailed view at the tray assembly of Fig. 10A in accordance with aspects of the present disclosure;
Fig. 10C depicts a detailed view at the tray assembly of Fig. 10A in accordance with aspects of the present disclosure;
Fig. 11A depicts an exemplary embodiment of the tray assembly in an open position and the locking system in the locked position in accordance with aspects of the present disclosure;
Fig. 11B depicts a detailed view at the tray assembly of Fig. 11A in accordance with aspects of the present disclosure;
Fig. 11C depicts a detailed view at the tray assembly of Fig. 11A in accordance with aspects of the present disclosure;
Fig. 12A depicts an exemplary embodiment of the tray assembly in a closed position and the locking system in the unlocked position in accordance with aspects of the present disclosure;
Fig. 12B depicts a detailed view at the tray assembly of Fig. 12A in accordance with aspects of the present disclosure;
Fig. 12C depicts a detailed view at the tray assembly of Fig. 12A in accordance with aspects of the present disclosure;
Fig. 13A depicts an exemplary embodiment of the tray assembly in a closed position and the locking system in the locked position in accordance with aspects of the present disclosure;
Fig. 13B depicts a detailed view at the tray assembly of Fig. 13A in accordance with aspects of the present disclosure;
Fig. 13C depicts a detailed view at the tray assembly of Fig. 13A in accordance with aspects of the present disclosure;
Fig. 14A depicts an exemplary detailed view of the locking system in an unlocked position in accordance with aspects of the present disclosure;
Fig. 14B depicts an exemplary detailed view of the locking system in a locked position in accordance with aspects of the present disclosure.
Fig. 15A depicts an exemplary detailed view of the locking system in an unlocked position in accordance with aspects of the present disclosure;
Fig. 15B depicts an exemplary detailed view of the locking system in a locked position in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

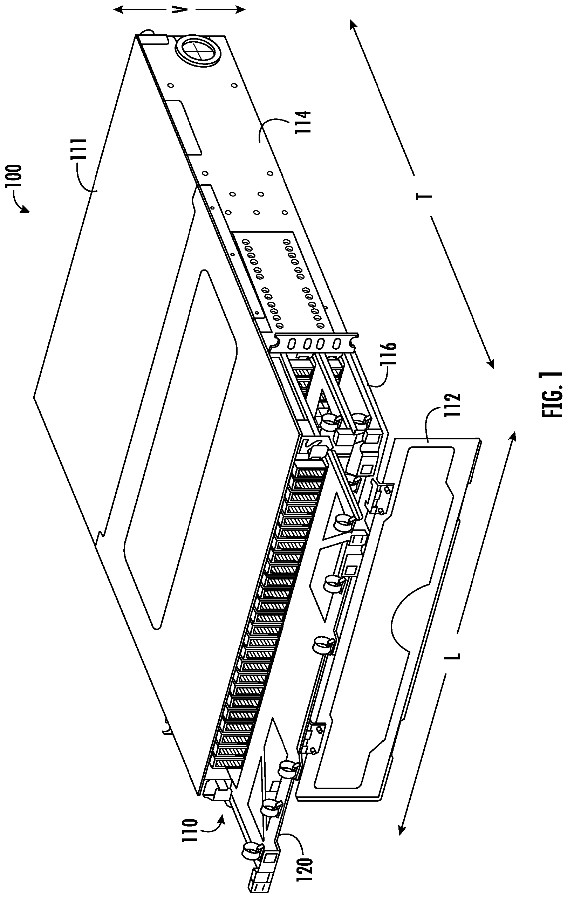

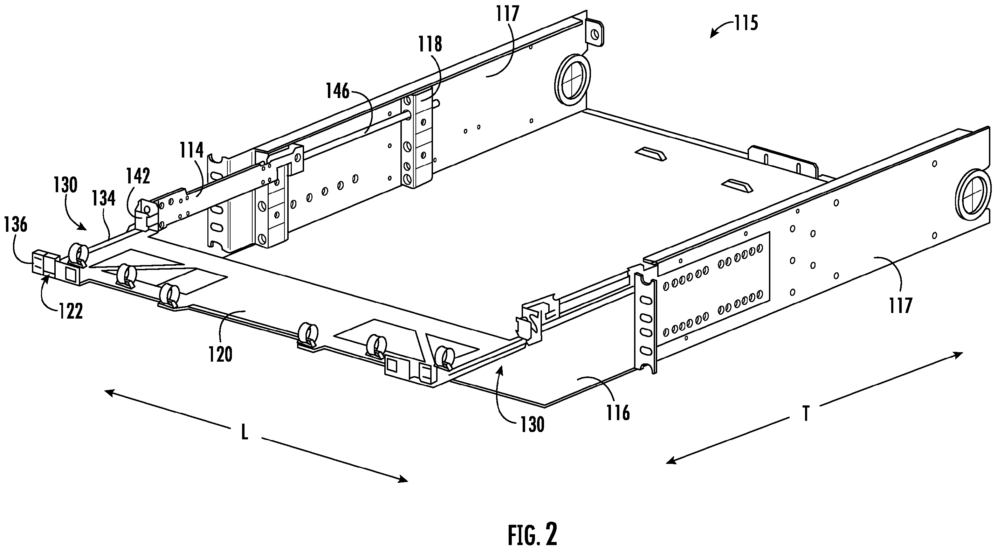

Referring now to the drawings, Figs. 1-15 depict embodiments of a locking system 130 for a tray assembly 115 for a telecommunications closure, cassette, equipment, or tray 110. Embodiments of a mount system 100 may include the locking system 130, the tray assembly 115, and the tray 110. However, it should be appreciated that embodiments of the locking system 130 may be included with various embodiments of trays or shelves. Additionally, or alternatively, embodiments of the locking system 130 and tray assembly 115 may be utilized with various equipment, including other telecommunications equipment, fiber optic equipment, closures, cassettes, or trays.

A lateral axis L and transverse axis T perpendicular to one another are provided for reference. Additionally, a vertical axis V may extend mutually orthogonal to the lateral axis L and transverse axis T. In various embodiments, the transverse axis T corresponds to a direction along which the locking system 130, the tray assembly 115, and/or the tray 110 may pull, push, extend, retract, insert, or remove, such as from a shelf. The lateral axis L may generally correspond to a major axis of extension of the cassette 110 at a shelf. However, it should be appreciated that the cassette 110 may be rotated or stacked along a minor axis, such as corresponding to a vertical axis.

The locking system 130 is coupled to a wall 114 at a housing 111. The locking system 130 is configured to selectively inhibit movement of a tray base 120 from an extended position and a retracted position. The locking system 130 includes a member 132, 134 extending along a desired direction of travel of the tray base 120 (e.g., along the transverse axis T). The locking system 130 includes a limiter 140 coupled to a fixed structure at the housing 111, such as a mount 118. The member 132, 134 is positioned in sliding arrangement relative to the limiter 140, such as in sliding arrangement along the desired direction of travel.

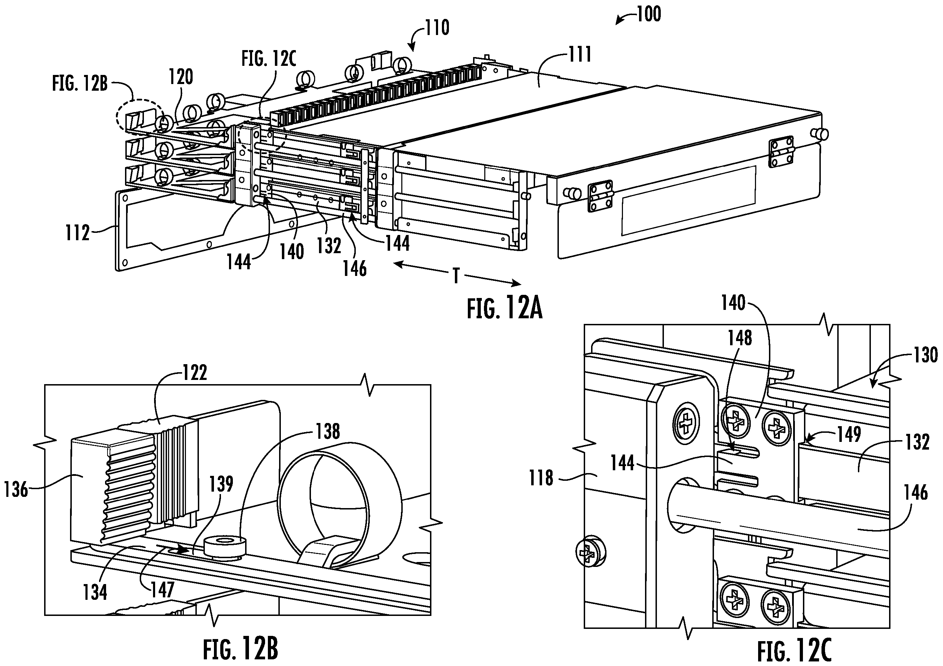

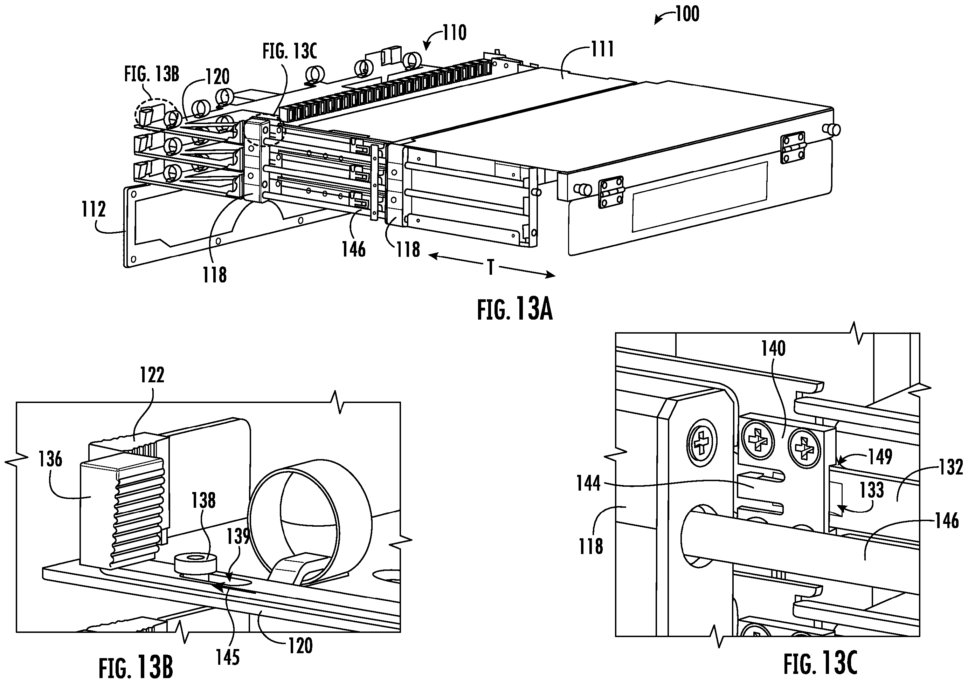

The limiter 140 includes a selectively deformable tab 144. The member 132, 134 is translatable along a first direction along the direction of travel (e.g., along direction 147 in Fig. 12B) to apply a force from the member 132, 134 to the deformable tab 144 to position the tab 144 in a locked position to align at least a portion of the tab 144 with the fixed structure along the direction of travel of the tray base 120. The member 132, 134 is translatable along a second direction (e.g., opposite of the first direction, such as along direction 145 depicted in Fig. 13B) to allow the tab 144 to position in an unlocked position removing the deformable tab 144 from alignment with the fixed structure along the direction of travel of the tray base 120.

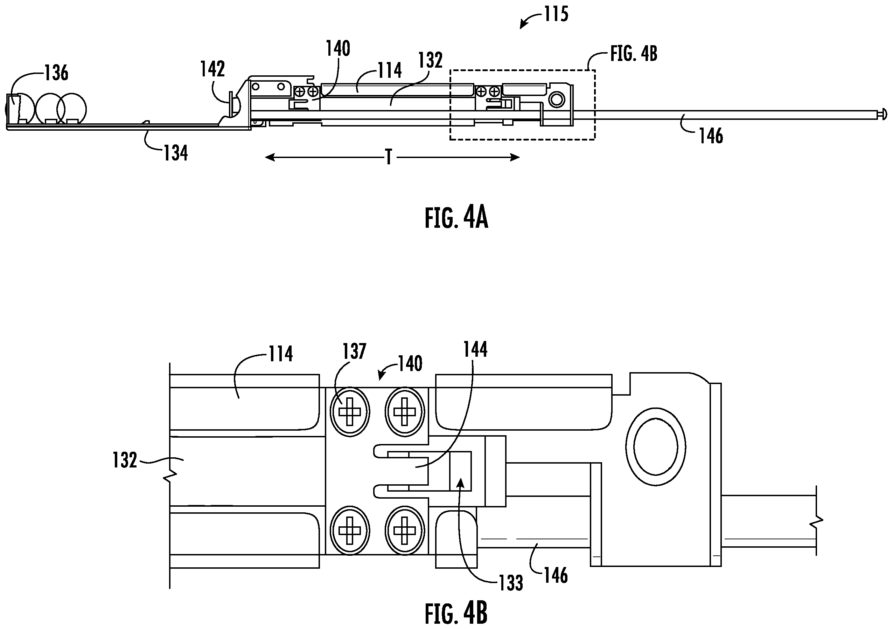

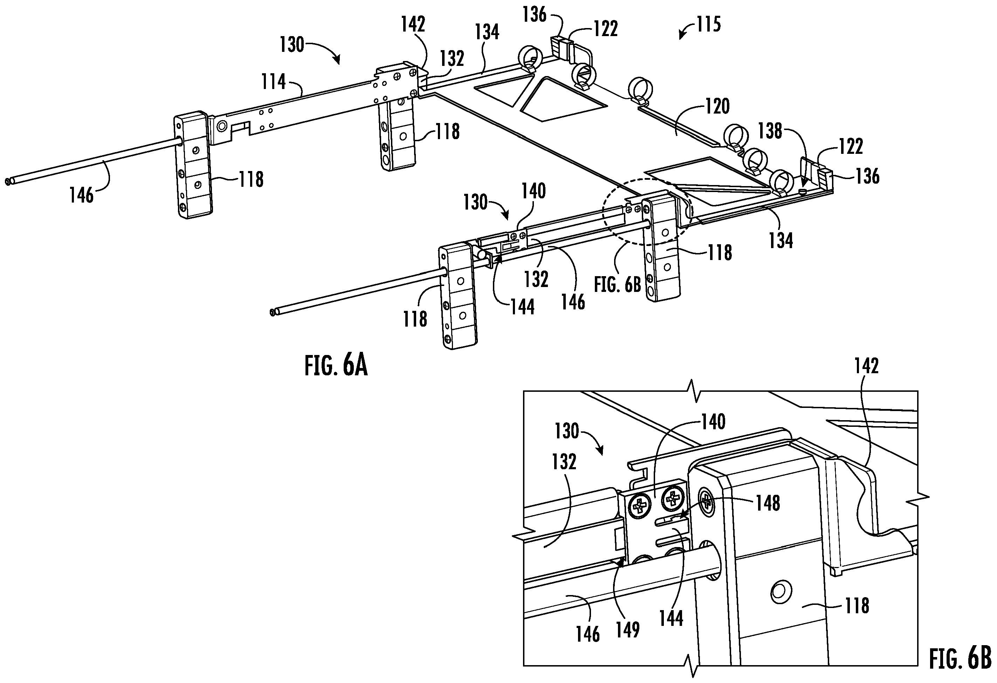

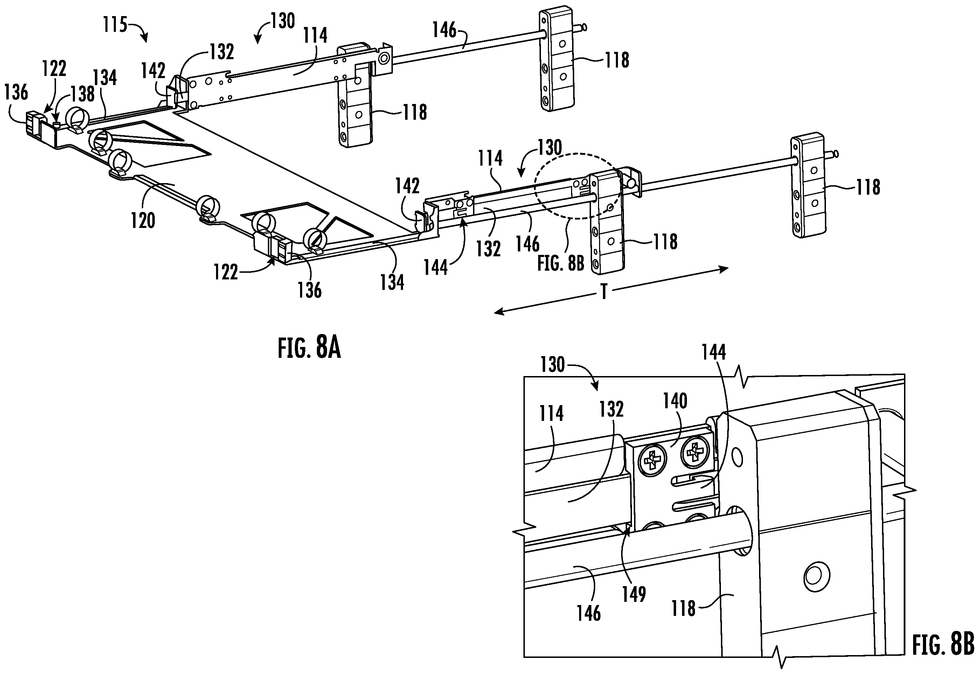

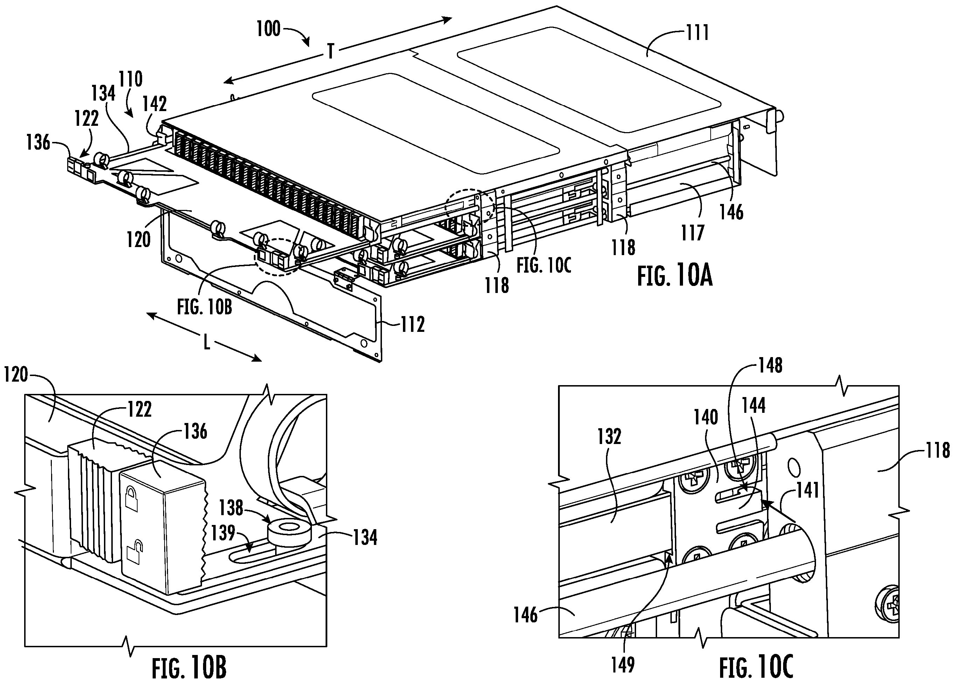

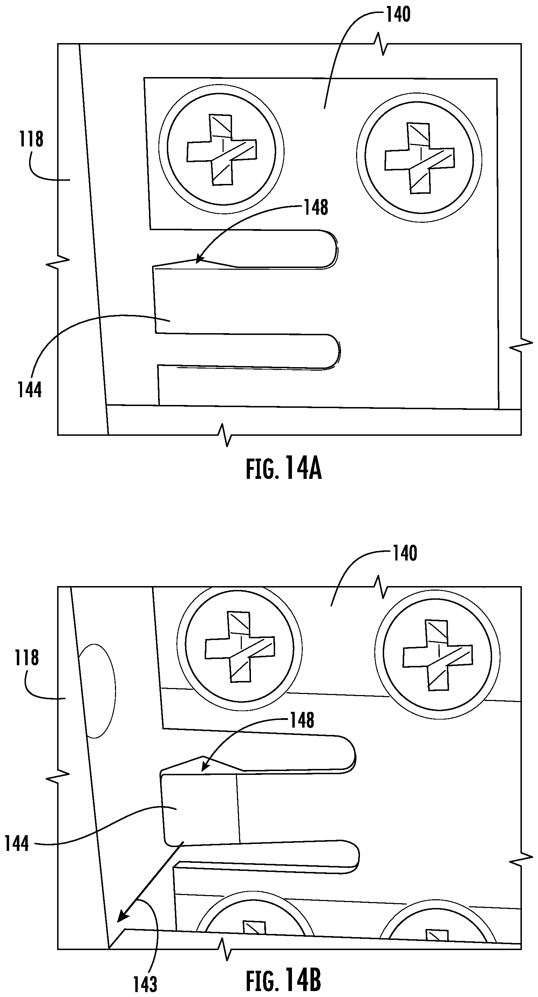

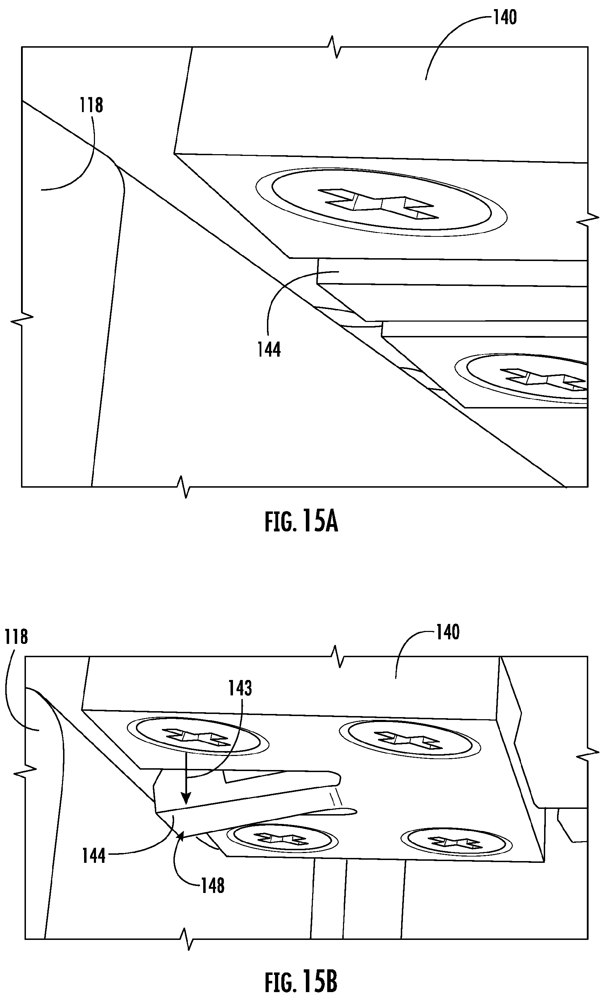

The locking system 130 may include a user interface tab 136 positioned at the member 132, 134. The user interface tab 136 is configured to receive force to translate the member 132, 134 along a first direction or second direction along the direction of travel. The user interface tab 136 may provide a structure at which a user may push to translate the member 132, 134 to deform the tab 144. For instance, translation of the tab 144 along the direction of travel of the tray base 120, such as the transverse axis T, is depicted from Fig. 4A to Fig. 5A, from Fig. 6A to Fig. 7A, from Fig. 8A to Fig. 9A, from Fig. 10A to Fig. 11A, and from Fig. 12A to Fig. 13A. Deformation of the tab 144 aligns to a surface that prevents translation of the tray base 120, such as depicted from Fig. 14A to Fig. 14B and from Fig. 15A to Fig. 15B. In various embodiments, the tab 144 is deformed to align at least a portion of the tab 144 with a fixed structure along the direction of travel of the tray base 120. The fixed structure includes a fixed or non-moving portion of the housing 111, such as a mount 118 or a sidewall 117 of the housing 111.

In various embodiments, the deformable tab 144 includes an elastic, compliant material configured to position the locking system 130 in the unlocked position when the member 132, 134 is removed from the deformable tab 144. The force from the member 132, 134 bends the deformable tab 144 to the locked position. For instance, Fig. 14A and Fig. 15A depict the tab 144 in an unforced position in which the tab 144 is recessed into the limiter 140. Fig. 14B and Fig. 15B depict the tab 144 in a forced position in which the tab 144 is protruded to at least partially align with a fixed structure at the housing 111 along the direction of travel of tray base 120. In various embodiments, the member 132, 134 contacts the tab 144 to push the tab 144 substantially along a direction perpendicular to the direction of travel, such as depicted at arrow 143 in Fig. 15B.

In some embodiments, the tray 110 may generally connect or rest at the tray rail 114. The tray rail 114, or plurality thereof, may be attached to a base wall 116 via the mount 118. The sidewall 117 may extend from the base wall 116, and a housing 111 may provide an exterior wall for housing a plurality of trays 110. One or more trays 110 may extend or retract from the housing 111, such as further described herein. For instance, the tray rail 114 may couple to the sidewall 117. Rollers or roller pins may facilitate extension and retraction of the tray assembly 115 into or out of a shelf. For instance, a pushed-in, retracted, or closed state may position the tray 110 within the shelf. A pulled-out, extended, or open state may position the equipment at least partially extending out of the shelf. A door 112 may be articulated to selectively reveal or conceal one or more trays 110. Embodiments of the locking system 130 depicted and described herein are configured to selectively lock and unlock the tray assembly 115 while in either the pushed-in/retracted state or pulled-out extended state.

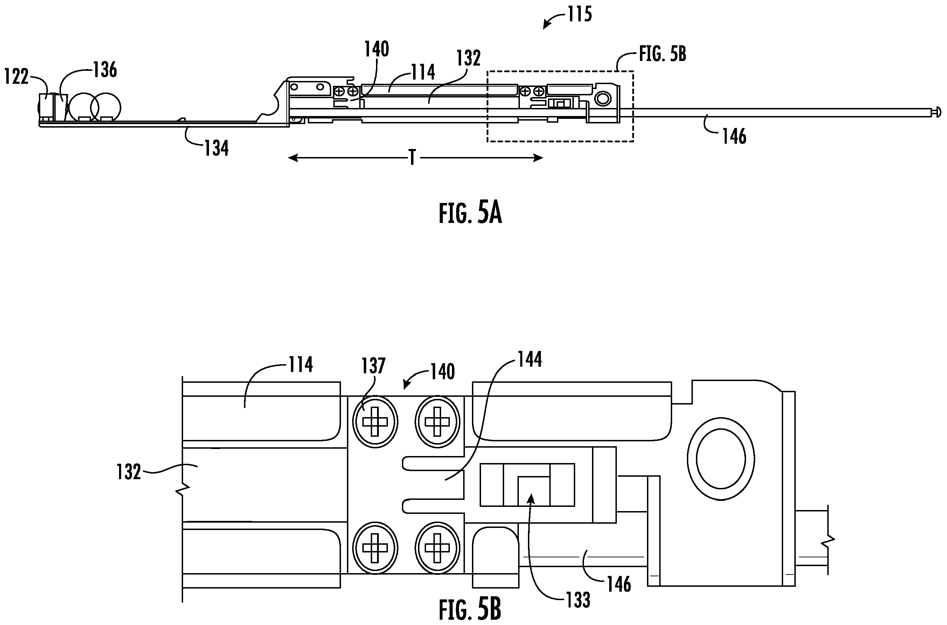

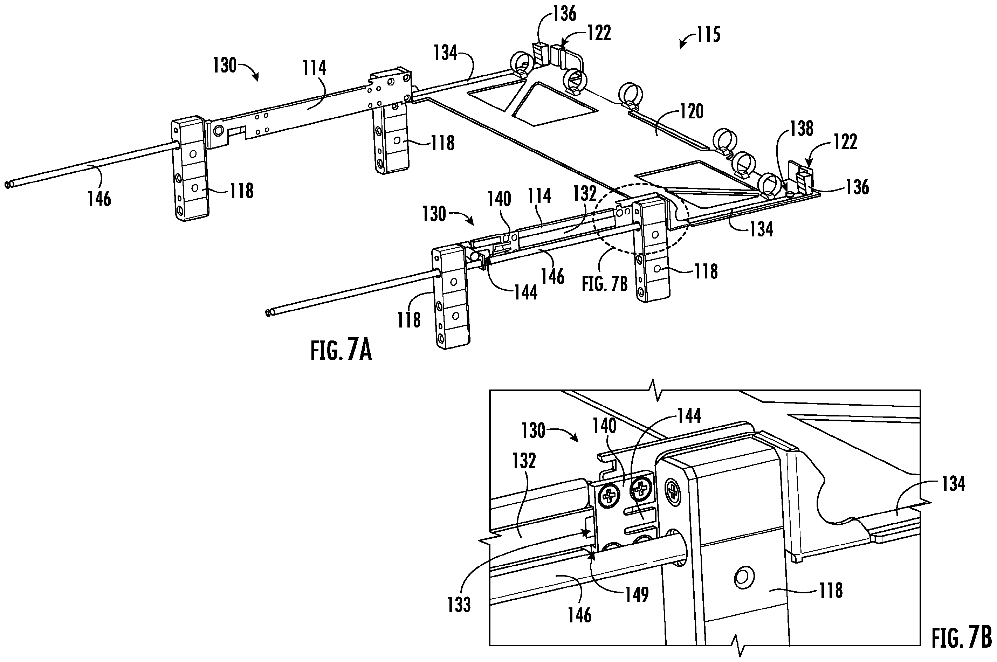

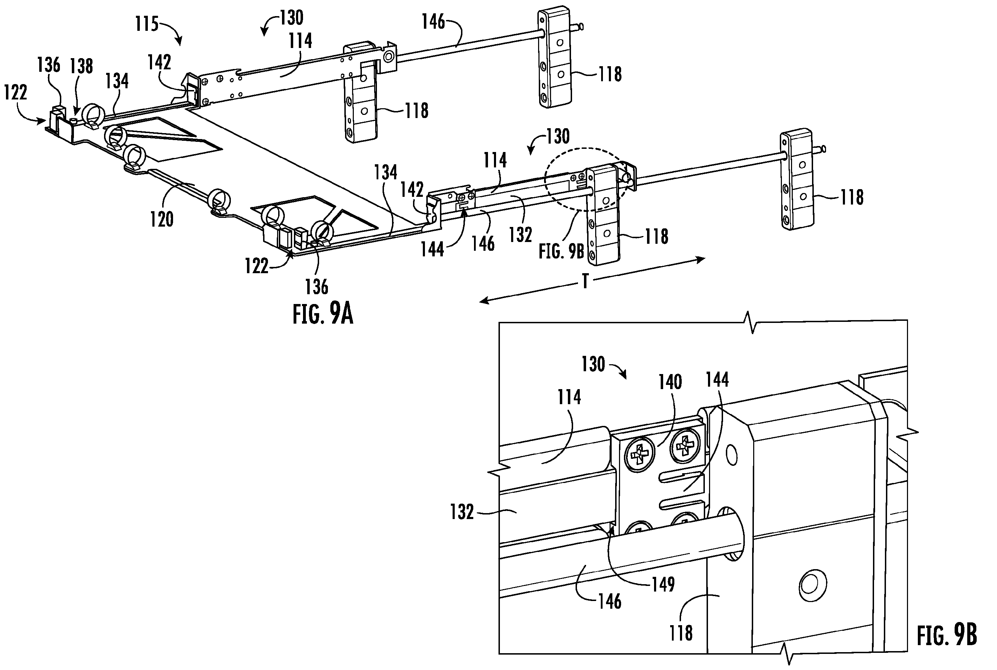

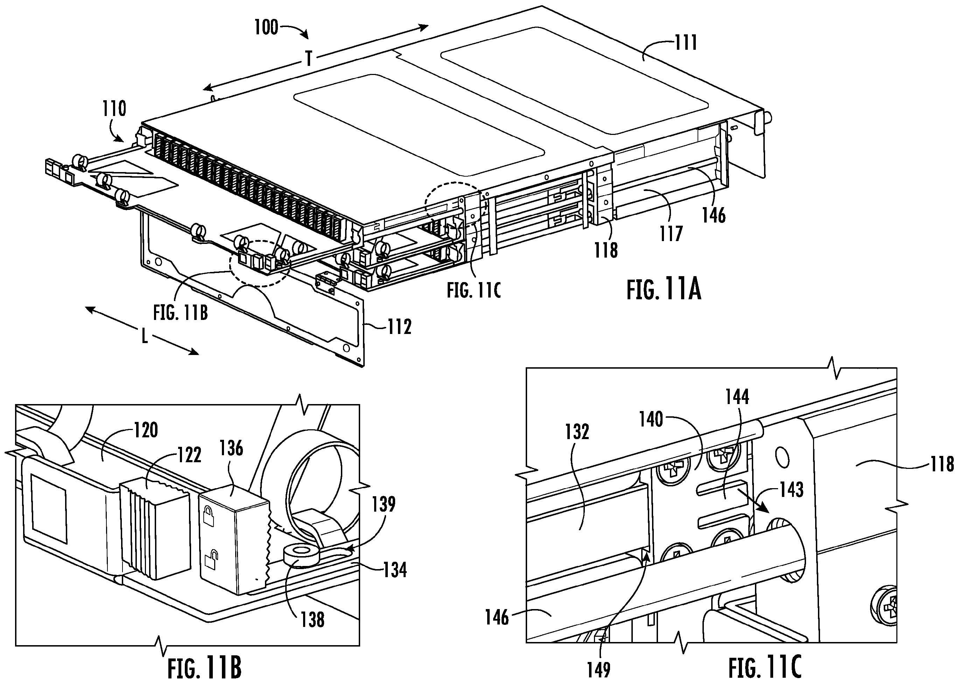

The locking system 130 may include the user interface tab 136 at which the user may pull to translate the member to allow the tab 144 to return to an un-deformed position, such as depicted as translating along the transverse axis T from Fig. 5A to Fig. 4A, from Fig. 7A to Fig. 6A, from Fig. 9A to Fig. 8A, from Fig. 11A to Fig. 10A, and from Fig. 13A to Fig. 12A. Pulling the user interface tab 136 removes a force from application to the tab 144, such as to allow the tab 144 to un-deform or restore to a non-obstructing position, such as depicted at Fig. 14A and Fig. 15A. As such, movement of the tray base 120 along the direction of travel (e.g., along the transverse axis T) is selectively obstructed and unobstructed to selectively inhibit and permit movement along the direction of travel.

Embodiments of the locking system 130 allow the tray 110 to be locked from movement in a closed position and an open position. As such, the locking system 130 may beneficially and advantageously limit tray movement, such as to prevent inadvertent or undesired cable manipulation or movement.

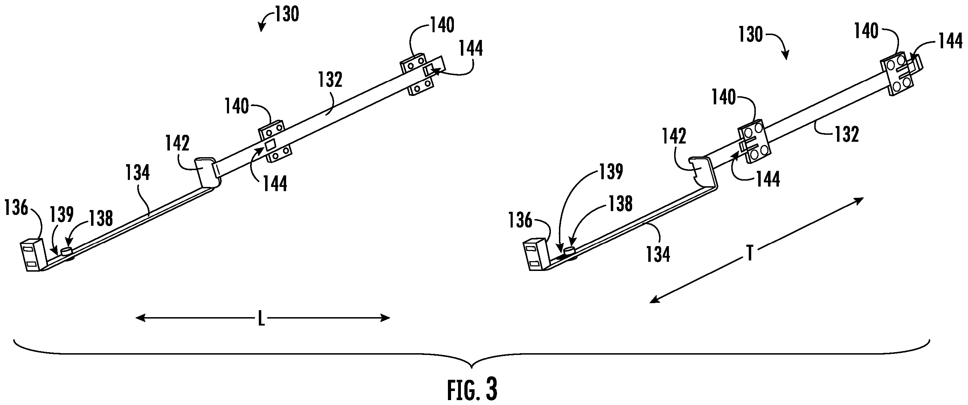

Referring to Fig. 3, in various embodiments, the locking system 130 may include the user interface tab 136 attached to the member 132, 134, such as a rail, rod, platform, or wall. The member 132, 134 may generally extend co-directional to an axis of desired movement of the tray, such as along the transverse axis T. In some embodiments, the member includes a first portion 134 and a second portion 132 and a stop wall 142 positioned between the portions 132, 134. The first portion 134 may form an end proximate to the user, such as at which the user interface tab 136 is positioned. The second portion 12 may form an end distal to the user, such as proximate to the tray rail 114 or positioned internal to the system 100. The stop wall 142 may be positioned at the member 132, 134 to limit or inhibit movement of the member 132, 134, such as along the transverse axis T.

The locking system 130 includes the limiter 140 at which the deformable tab 144 is positioned. In various embodiments, the tab 144 is formed of an elastic or selectively deformable material, such as to facilitate deformation between an unlocked position (e.g., depicted in Fig. 14A and Fig. 15A) and a locked position (e.g., depicted in Fig. 14B and Fig. 15B). The tab 144 may extend co-directional to the axis of desired movement of the tray, such as along the transverse axis T, and deform in a direction substantially perpendicular to the axis of desired movement (e.g., depicted along direction 143 in Fig. 15B).

In various embodiments, the limiter 140 includes a wall, block, or body at which the tab 144 is formed. The limiter 140 is coupled or fastened (e.g., depicted at fastener 137 at Fig. 4B and Fig. 5B) to a sidewall or tray rail 114 of the housing 111. In some embodiments, the limiter 140 is coupled to the member, such as at the second portion 132. The limiter 140 forms a body at which the member, such as at the second portion 132, is permitted to selectively contact the deformable tab 144. For instance, the member 132, 134 is coupled to the limiter 140 in sliding arrangement. In various embodiments, the limiter 140 includes an opening 149 through which the member 132 is extendable in sliding arrangement along the direction of travel to selectively contact the deformable tab 144.

In some embodiments, the member 132 includes a first limiter 140A and a second limiter 140B separated from one another along the direction of travel of the tray base 120 (e.g., along transverse axis T). The first limiter 140A is positioned to inhibit movement along a first direction (e.g., direction 147 in Fig. 12B), and the second limiter 140B is positioned to inhibit movement along a second direction (e.g., direction 145 in Fig. 13B) opposite along the direction of travel from the first direction. For instance, the limiters 140 may be positioned adjacent to a fixed structure, such as mount 118. Protrusion of the tab 144 in alignment with the fixed structure along the direction of travel inhibits movement of the tray base 120 along direction of travel.

In various embodiments, the deformable tab 144 includes a protrusion 148 configured to selectively extend into and out of alignment with the fixed structure (e.g., mount 118) along the direction of travel (e.g., transverse axis T). The member 132 is configured to contact the protrusion 148 to position the deformable tab 144 in the locked position. The protrusion 148 extends substantially along a direction perpendicular to the direction of travel. When the member 132 contacts the deformable tab 144 at the protrusion 148, the tab 144 is bent or otherwise moved to position the tab 144 in the locked position.

In some embodiments, the member 132 includes a recess 133 into which at least a portion of the deformable tab 144 is extendable. The recess 133 may generally form a depression, opening, or nadir into the member 132. For instance, the recess 133 forms a void allowing the tab 144, or the protrusion 148 thereof, to extend perpendicular to the direction of travel of the tray base 120, such as depicted in Fig. 11C at direction 141. For instance, in an embodiment of operation, the tab 144 is extended into the recess 133 when the tab 144 is in the unlocked position. In still some embodiments, the protrusion 148 extends into the recess 133 when the tab 144 is in the unlocked position.

In an embodiment of operation, when the user pushes the member 132 along the first direction 147, the member 132 moves relative to the tab 144 to remove the tab 144 from the recess 133. The tab 144, such as the protrusion 148, contacts the member 132, and the member 132 bends the tab 144 at least partially along the direction perpendicular to the direction of travel (e.g., depicted via arrow 143) to align the tab 144 with the mount 118 along the direction of travel. Alignment of the tab 144 and the mount 118 obstructs movement of the tray rail 118, such as to lock the tray base 120 in either the retracted or extended position, as further described herein.

In still an embodiment of operation, when the user pulls the member 132 along the second direction 145, the member 132 moves relative to the tab 144 to position the tab 144, such as the protrusion 148, in the recess 133. Positioning the tab 144 in the recess 133 removes the force deforming the tab 144 into alignment with the mount 118, such as to remove the obstruction along the direction of travel and permit movement of the tray base 120.

The tray assembly 115 may include a rod or rail 146 in sliding arrangement with a mount 118. The tray base 120 may include the rail 146 extending along a direction of travel of the tray 110, such as along the transverse axis T. The mount 118 includes a fastening interface at which the sidewall 117 is attachable to the mount 118. The tray 110 or tray assembly 115 may include rollers or roller pins facilitating movement of the tray along the rail 146, such as to position the tray 110 in a pushed-in state retracted into the housing 111 or a shelf, or a pulled-out state extending from or outside of the housing 111 or the shelf. For instance, Fig. 12A and Fig. 13A depict a plurality of trays 110 in an un-pulled or pushed-in state, and Fig. 10A and Fig. 11A depict one of a plurality of trays 110 in the pulled-out state.

Referring to Figs. 6A-6B and Figs. 7A-7B, in an exemplary operation of the tray assembly 115, the tray assembly 115 is in a pushed-in state into a shelf or tray 110. Figs. 7A-7B depict the locking assembly 130 pushed-in or locked position along the transverse axis T in contrast to the pulled-out position or unlocked position depicted in Figs. 6A-6B. In the pushed-in or locked position, such as depicted in detail in Fig. 7B, the tab 144 at the locking system 130 is deformed. Fig. 14B and Fig. 15B further depict an exemplary deformation of the tab 144 at the limiter 140, such as extending or protruding outward or substantially perpendicular to the direction of travel of the member 132, 134 or tray 115 relative to the un-deformed state depicted in Fig. 14A and Fig. 15A. For instance, arrow 143 provides a reference direction substantially perpendicular along which the tab 144 is deformed. Arrow 143 may correspond substantially to the lateral axis L perpendicular to the axis of movement of the tray along the transverse axis T.

Referring to Figs. 8A-8B and Figs. 9A-9B, in an exemplary operation of the tray assembly 115, the tray assembly 115 is in a pulled-out state extending from or outside a shelf or tray 110. Figs. 9A-9B depict the locking assembly 130 pushed-in or locked position along the transverse axis T in contrast to the pulled-out position or unlocked position depicted in Figs. 8A-8B. In the pushed-in or locked position, such as depicted in detail in Fig. 9B, the tab 144 at the locking system 130 is deformed, such as exemplarily depicted and described in regard to Fig. 14B and Fig. 15B.

Referring now to Fig. 10A and Fig. 11A, and further depicted in detail in Fig. 10B and Fig. 11B, respectively, in some embodiments, the locking system 130 includes a limit pin 138 extending from the member 134. The limit pin 138 forms a detent along the direction of travel of the tray, such as along the transverse axis T. The limit pin 138 may include a member or head extending through a slot 139 extending through the member 134 along the direction of travel, such as extending along the transverse axis T. The limit pin 138 may be attached to a tray base 120. The limit pin 138 attached to the tray base 120 may provide a point relative to the tray base 120 to limit relative movement of the locking system 130.

For instance, referring to Figs. 10A-10C and Figs. 11A-11C, the tray is positioned in a pulled or extended state from the shelf. Referring to Figs. 10A-10C, the limit pin 138 is in a first position, such as at a distal end at the slot 139, corresponding to an unlocked position of the locking system 130. In an exemplary embodiment of operation of the locking system 130, the user may press or push the user interface tab 136 along the transverse axis T to translate the locking system 130 from an unlocked state (depicted in Figs. 10A-10C and Fig. 14A and Fig. 15A) to a locked state (depicted in Figs. 11A-11C depicted in Fig. 14B and Fig. 15B). Referring to Figs. 11A-11C, the limit pin 138 is in a second position, such as at a proximal end at the slot 139, corresponding to the locked position of the locking system 130. In an exemplary embodiment of operation of the locking system 130, the user may pull the user interface tab 136 along the transverse axis T to translate the locking system 130 from the locked state to the unlocked state.

In another instance, referring to Figs. 12A-12C and Figs. 13A-13C, the tray is positioned in an un-pulled or retracted state into the shelf. Referring to Figs. 12A-12C, the limit pin 138 is in a first position, such as at a distal end at the slot 139, corresponding to an unlocked position of the locking system 130. In an exemplary embodiment of operation of the locking system 130, the user may press or push the user interface tab 136 along the transverse axis T to translate the locking system 130 from an unlocked state (depicted in Figs. 12A-12C and Fig. 14A and Fig. 15A) to a locked state (depicted in Figs. 13A-13C depicted in Fig. 14B and Fig. 15B). Referring to Figs. 13A-13C, the limit pin 138 is in a second position, such as at a proximal end at the slot 139, corresponding to the locked position of the locking system 130. In an exemplary embodiment of operation of the locking system 130, the user may pull the user interface tab 136 along the transverse axis T to translate the locking system 130 from the locked state to the unlocked state.

Embodiments of the locking system provided herein may beneficially and advantageously provide inhibits on movement of the tray. Embodiments provided herein provide selective locking and unlocking of the tray in extended or retracted positions, such as to inhibit undesired movement while in either the extended or retracted positions.

Embodiments provided herein may provide benefits over friction fits between rails and restrictor blocks. For instance, friction fits may hold the tray in certain positions, but the friction may be too easily overcome by force of insertion or removal of telecommunications equipment (e.g., a patch cord from an adapter). Various forces during manipulation, maintenance, or other work at the trays may be large enough to overcome the force of the friction fit and allow for undesired movement of the tray.

Embodiments of the locking system 130 may allow for one or more trays to be locked closed, such as to prevent manipulation of the cables when in position. Still various embodiments of the locking system 30 may allow for one or more trays to be locked open, such as to facilitate greater access to cables during insertion or removal of telecommunications equipment (e.g., patch cords). Embodiments of the locking system 130 may be configured such that forces corresponding to insertion or removal of cables cannot overcome the locking system, such as may prevent inadvertent and undesired movement of the tray and cables.

Further aspects of the disclosure are provided in one or more of the following clauses:
1. A tray assembly for a telecommunications tray, the tray assembly including a housing including a wall coupled to a mount; a tray base in sliding arrangement relative to the mount, the tray base configured to move between an extended position at least partially extending out of the housing and a retracted position into the housing; and a locking system coupled to the wall at the housing, the locking system configured to selectively inhibit movement of the tray base from the extended position and the retracted position, the locking system including a member extending along a direction of travel of the tray base, the locking system including a limiter coupled to the mount, wherein the member is positioned in sliding arrangement relative to the limiter, the limiter including a selectively deformable tab, wherein the member is translatable along a first direction to apply a force from the member to the deformable tab to position the deformable tab in a locked position to align the at least a portion of the deformable tab with the mount along the direction of travel of the tray base, and wherein the member is translatable along a second direction to allow the deformable tab to position in an unlocked position removing the deformable tab from alignment with the mount along the direction of travel of the tray base.
2. The tray assembly of any one or more clauses herein, wherein the deformable tab includes an elastic, compliant material configured to position in the unlocked position when the member is removed from the deformable tab, and wherein the force from the member bends the deformable tab to the locked position.
3. The tray assembly of any one or more clauses herein, wherein the deformable tab includes a protrusion configured to contact the member to position the deformable tab in the locked position, and wherein the protrusion is configured to align with the mount along the direction of travel of the tray base to position the deformable tab in the locked position.
4. The tray assembly of any one or more clauses herein, wherein the deformable tab includes a protrusion configured to bend substantially perpendicular to the first direction or second direction to position the deformable tab in the unlocked position.
5. The tray assembly of any one or more clauses herein, wherein the limiter forms a body at which the member is permitted to selectively contact the deformable tab.
6. The tray assembly of any one or more clauses herein, wherein the deformable tab includes a protrusion, and wherein the member is configured to contact the protrusion to position the deformable tab in the locked position.
7. The tray assembly of any one or more clauses herein, wherein the limiter forming the body forms an opening through which the member is extendable along the direction of travel to selectively contact the deformable tab.
8. The tray assembly of any one or more clauses herein, wherein the member includes a recess, and wherein the deformable tab is extended into the recess when the deformable tab is in the unlocked position.
9. The tray assembly of any one or more clauses herein, wherein the deformable tab includes a protrusion extending substantially perpendicular to the first direction or the second direction, wherein the protrusion extends into the recess when the deformable tab is in the unlocked position.
10. The tray assembly of any one or more clauses herein, wherein the locking system includes a limit pin extending from the member, the limit pin forming a detent along the direction of travel.
11. The tray assembly of any one or more clauses herein, wherein the limit pin is positioned in a slot at the member and extending along the direction of travel of the tray base, and wherein an extension of the slot along the direction of travel and the limit pin extending from the slot limits movement of the member along the direction of travel.
12. The tray assembly of any one or more clauses herein, wherein the limit pin is affixed to the tray base and extending through the slot at the member.
13. The tray assembly of any one or more clauses herein, wherein the locking system includes a user interface tab positioned at the member, the user interface tab configured to receive the force to translate the member along the first direction or the second direction.
14. The tray assembly of any one or more clauses herein, the tray base including a rail extending along the direction of travel in sliding arrangement with the mount.
15. The tray assembly of any one or more clauses herein, wherein the member includes a first limiter and a second limiter separated from one another along the direction of travel of the tray base, wherein the first limiter is positioned to inhibit movement along the first direction, and wherein the second limiter is positioned to inhibit movement along the second direction opposite along the direction of travel from the first direction.
16. A locking system for a tray assembly, the locking system including a member extending along a direction of travel of the tray assembly, the member including a recess; a limiter attachable to a fixed structure at the tray assembly, wherein the limiter includes an opening into which the member is extendable in sliding arrangement along the direction of travel of the tray assembly, the limiter including a selectively deformable tab including a compliant, elastic material, wherein the member is translatable along a first direction to allow the deformable tab to extend at least partially into the recess at the member to position the locking system in an unlocked position, and wherein the member is translatable along a second direction to apply a force from the member to the deformable tab to position the locking system in a locked position.
17. The locking system of any one or more clauses herein, wherein the deformable tab includes an elastic, compliant material configured to position in the unlocked position when the member is removed from the deformable tab, and wherein the force from the member bends the deformable tab to the locked position.
18. The locking system of any one or more clauses herein, wherein the deformable tab includes a protrusion configured to contact the member to position the deformable tab in the locked position.
19. The locking system of any one or more clauses herein, wherein the protrusion is configured to align with the fixed structure along the direction of travel of the tray base to position the deformable tab in the locked position.
20. The locking system of any one or more clauses herein, wherein the member includes a first limiter and a second limiter separated from one another along the direction of travel of the tray base, wherein the first limiter is positioned to inhibit movement along the first direction, and wherein the second limiter is positioned to inhibit movement along the second direction opposite along the direction of travel from the first direction.
21. A tray assembly for a telecommunications tray, including the locking system of any one or more clauses herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A tray assembly (115) for a telecommunications tray, the tray assembly (115) comprising:
a housing (111) comprising a wall (114) coupled to a mount (118);
a tray base (120) in sliding arrangement relative to the mount (118), the tray base (120) configured to move between an extended position at least partially extending out of the housing (111) and a retracted position into the housing (111); and
a locking system (130) coupled to the wall (114) at the housing (111), the locking system (130) configured to selectively inhibit movement of the tray base (120) from the extended position and the retracted position, the locking system (130) comprising a member (132, 134) extending along a direction of travel of the tray base (120), the locking system (130) comprising a limiter (140) coupled to the mount (118), wherein the member (132, 134) is positioned in sliding arrangement relative to the limiter (140), the limiter (140) comprising a selectively deformable tab (144), wherein the member (132, 134) is translatable along a first direction to apply a force from the member (132, 134) to the deformable tab (144) to position the deformable tab (144) in a locked position to align the at least a portion of the deformable tab (144) with the mount (118) along the direction of travel of the tray base (120), and wherein the member (132, 134) is translatable along a second direction to allow the deformable tab (144) to position in an unlocked position removing the deformable tab (144) from alignment with the mount (118) along the direction of travel of the tray base (120).

2. A tray assembly (115) according to claim 1, wherein the deformable tab (144) comprises an elastic, compliant material configured to position in the unlocked position when the member (132, 134) is removed from the deformable tab (144), and wherein the force from the member (132, 134) bends the deformable tab (144) to the locked position.

3. A tray assembly (115) according to claim 2, wherein the deformable tab (144) comprises a protrusion (148) configured to contact the member (132, 134) to position the deformable tab (144) in the locked position, and wherein the protrusion (148) is configured to align with the mount (118) along the direction of travel of the tray base (120) to position the deformable tab (144) in the locked position.

4. A tray assembly (115) according to claim 2, wherein the deformable tab (144) comprises a protrusion (148) configured to bend substantially perpendicular to the first direction or second direction to position the deformable tab (144) in the unlocked position.

5. A tray assembly (115) according to claim 1 or claim 2, wherein the limiter (140) forms a body at which the member (132, 134) is permitted to selectively contact the deformable tab (144).

6. A tray assembly (115) according to claim 5, wherein the deformable tab (144) comprises a protrusion (148), and wherein the member (132, 134) is configured to contact the protrusion (148) to position the deformable tab (144) in the locked position.

7. A tray assembly (115) according to claim 5 or claim 6, wherein the limiter (140) forming the body forms an opening (149) through which the member (132) is extendable along the direction of travel to selectively contact the deformable tab (144).

8. A tray assembly (115) according to any of claims 5 to 7, wherein the member (132) comprises a recess (133), and wherein the deformable tab (144) is extended into the recess (133) when the deformable tab (144) is in the unlocked position, wherein the deformable tab (144) optionally comprises a protrusion (148) extending substantially perpendicular to the first direction or the second direction, wherein the protrusion (148) extends into the recess (133) when the deformable tab (148) is in the unlocked position.

9. A tray assembly (115) according to any preceding claim, wherein the locking system (130) comprises a limit pin (138) extending from the member (134), the limit pin (134) forming a detent along the direction of travel.

10. A tray assembly (115) according to claim 9, wherein the limit pin (138) is positioned in a slot (139) at the member (134) and extending along the direction of travel of the tray base (120), and wherein an extension of the slot (139) along the direction of travel and the limit pin (138) extending from the slot (139) limits movement of the member (134) along the direction of travel.

11. A tray assembly (115) according to claim 10, wherein the limit pin (138) is affixed to the tray base (120) and extends through the slot (139) at the member (134).

12. A tray assembly (115) according to any preceding claim, wherein the locking system (130) comprises a user interface tab (136) positioned at the member (132, 134), the user interface tab (136) configured to receive the force to translate the member (132, 134) along the first direction or the second direction.

13. A tray assembly (115) according to any preceding claim, the tray base (120) comprising a rail (114) extending along the direction of travel in sliding arrangement with the mount (118).

14. A tray assembly (115) according to any preceding claim, wherein the member (132) comprises a first limiter (140A) and a second limiter (140B) separated from one another along the direction of travel of the tray base (120), wherein the first limiter (140A) is positioned to inhibit movement along the first direction, and wherein the second limiter (140B) is positioned to inhibit movement along the second direction opposite along the direction of travel from the first direction.

15. A locking system (130) for a tray assembly (115), the locking system (130) comprising:
a member (132) extending along a direction of travel of the tray assembly (115), the member (132) comprising a recess (133);
a limiter (140) attachable to a fixed structure at the tray assembly (115), wherein the limiter (140) comprises an opening (149) into which the member (132) is extendable in sliding arrangement along the direction of travel of the tray assembly (115), the limiter (140) comprising a selectively deformable tab (144) comprising a compliant, elastic material, wherein the member (132) is translatable along a first direction to allow the deformable tab (144) to extend at least partially into the recess (133) at the member (132) to position the locking system (130) in an unlocked position, and wherein the member (132) is translatable along a second direction to apply a force from the member (132) to the deformable tab (144) to position the locking system in a locked position.
